# EUROPEAN PATENT SPECIFICATION

(11) **EP 4 048 027 B1**
(45) Date of publication and mention of the grant of the patent: **24.07.2024**
(21) Application number: 20900294.8
(22) Date of filing: 30.10.2020
(51) Int. Cl.: H05B 6/64, H05B 6/50, H05B 6/62

(54) **CONTROL METHOD FOR HEATING DEVICE, AND HEATING DEVICE**
STEUERVERFAHREN FÜR EINE HEIZVORRICHTUNG UND HEIZVORRICHTUNG
PROCÉDÉ DE COMMANDE POUR DISPOSITIF DE CHAUFFAGE ET DISPOSITIF DE CHAUFFAGE

(30) Priority: 13.12.2019 CN 201911289225
(43) Date of publication of application: 24.08.2022
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: LI, Chunyang, Qingdao, Shandong 266101 (CN); MA, Jian, Qingdao, Shandong 266101 (CN); ZHU, Xiaobing, Qingdao, Shandong 266101 (CN); WANG, Ming, Qingdao, Shandong 266101 (CN); LI, Peng, Qingdao, Shandong 266101 (CN); HAN, Zhiqiang, Qingdao, Shandong 266101 (CN); WANG, Haijuan, Qingdao, Shandong 266101 (CN); JI, Lisheng, Qingdao, Shandong 266101 (CN); LIU, Haoquan, Qingdao, Shandong 266101 (CN)
(74) Representative: Ziebig Hengelhaupt Intellectual Property Attorneys Patentanwaltskanzlei PartGmbB
(86) International application number: PCT/CN2020/125513
(87) International publication number: WO 2021/114951

(56) References cited:
- EP-A1- 3 503 679
- CN-A- 106 288 626
- CN-A- 107 327 879
- CN-A- 108 668 395
- CN-A- 110 189 919
- CN-A- 110 507 209
- US-A- 4 521 658
- US-B1- 6 242 714

## Description

### FIELD OF THE INVENTION

The present invention relates to the field of food processing, and particularly to a control method for an electromagnetic wave heating device, and a heating device.

### BACKGROUND OF THE INVENTION

The quality of foods is kept by freezing. However, frozen foods need to be thawed before processing or consumption. In order to make it convenient for a user to thaw, foods are usually thawed by an electromagnetic wave heating device.

EP 3 503 679 A1 discloses a defrosting system includes an RF signal source, two electrodes proximate to a cavity within which a load to be defrosted is positioned, a transmission path between the RF signal source and the electrodes, and an impedance matching network electrically coupled along the transmission path between the output of the RF signal source and the electrodes. The system also includes power detection circuitry coupled to the trans- mission path and configured to detect reflected signal power along the transmission path. A system controller is configured to modify, based on the reflected signal power, a value of a variable passive component of the impedance matching network to reduce the reflected signal power. The impedance matching network may be a single-ended network or a double-ended network.

CN 106 288 626 A teaches a thawing device, a refrigerator, and a thawing control method thereof, wherein a first electrode plate is disposed on the top of the inner wall of the housing, a second electrode plate is disposed on the bottom of the inner wall of the housing, and the first electrode plate and the second electrode plate are respectively connected to the two ends of the high-frequency power supply. When the high-frequency power supply is working, a high-frequency alternating electric field is generated between the first electrode plate and the second electrode plate to generate high-frequency electromagnetic waves act on the food to be thawed. Thawing foods with the electromagnetic wave heating device not only achieves a high speed and high efficiency, but also ensures low losses of nutrients in foods. However, in the prior art, thawing time is input manually by a user, and operating power of an electromagnetic wave generation module is a preset fixed power value. As a result, a requirement on the user is too high, and foods tend to be too cold or too hot after being heated. Moreover, contents of substances in foods of different varieties are different, so the problems of uneven heating and local overheating arise easily.

US 4 521 658 A describes a microwave oven scale apparatus for coupling weight from the cavity and for providing a weight corresponding signal. The weight corresponding signal is used by a microcomputer to compute cooking times. An operator of the microwave oven can input the weight of a dish by reading an integrated scale of the microwave oven or by pressing a button such that the microwave oven copies the weight from the scale into a control unit.

### BRIEF DESCRIPTION OF THE INVENTION

An objective of a first aspect of the present invention is to provide a control method for an electromagnetic wave heating device with increased error tolerance rate. An operating parameter of an electromagnetic wave generation module is determined by a more preferred method.

A further objective of the first aspect of the present invention is to improve the accuracy of an obtained weight of an object to be processed.

Another further objective of the first aspect of the present invention is to avoid the occurrence of overheating.

An objective of a second aspect of the present invention is to provide an electromagnetic wave heating device.

According to the first aspect of the present invention, a control method for a heating device is provided, the heating device including an electromagnetic wave generation module configured to generate an electromagnetic wave signal for heating an object to be processed, the control method including:
determining or obtaining attribute information of the object to be processed, the attribute information at least including food groups, and each of the food groups including at least one food variety;
determining operating power and/or operating time of the electromagnetic wave generation module according to the attribute information; and
controlling the electromagnetic wave generation module to operate according to the operating power and/or the operating time.

The attribute information further includes a feature measure reflecting a weight of the object to be processed.

The step of determining operating power and/or operating time of the electromagnetic wave generation module according to the attribute information includes:
matching a power base of the operating power according to the feature measure in accordance with a preset power base correspondence, and matching a power coefficient of the operating power according to the food groups in accordance with a preset power coefficient correspondence; and
calculating the operating power according to the power base and the power coefficient, the power base correspondence recording power bases corresponding to different feature measures, and the power coefficient correspondence recording power coefficients corresponding to different food groups, wherein the heating device further includes a cavity capacitor including a cavity configured for placement of the object to be processed and a radiation polar plate arranged in the cavity, and the electromagnetic wave generation module is electrically connected with the radiation polar plate of the cavity capacitor so as to generate an electromagnetic wave in the cavity capacitor to heat the object to be processed in the cavity capacitor (110), and the feature measure is a capacitance of the cavity capacitor.

Optionally, the step of determining operating power and/or operating time of the electromagnetic wave generation module according to the attribute information includes: matching the operating power according to the food groups and the feature measure in accordance with a preset power correspondence, the power correspondence recording operating power corresponding to different food groups and different feature measures.

Optionally, the step of determining operating power and/or operating time of the electromagnetic wave generation module according to the attribute information includes:
matching a time base of the operating time according to the feature measure in accordance with a preset time base correspondence, and matching a time coefficient of the operating time according to the food groups in accordance with a preset time coefficient correspondence; and
calculating the operating time according to the time base and the time coefficient, the time base correspondence recording time bases corresponding to different feature measures, and the time coefficient correspondence recording time coefficients corresponding to different food groups.

Optionally, the step of determining operating power and/or operating time of the electromagnetic wave generation module according to the attribute information includes:
matching the operating time according to the food groups and the feature measure in accordance with a preset time correspondence, the time correspondence recording operating time corresponding to different food groups and different feature measures.

Optionally, the attribute information further includes an initial temperature of the object to be processed.

Optionally, the step of determining operating power and/or operating time of the electromagnetic wave generation module according to the attribute information includes:
matching a power base of the operating power according to the feature measure and the initial temperature of the object to be processed in accordance with a preset power base correspondence, and matching a power coefficient of the operating power according to the food groups in accordance with a preset power coefficient correspondence; and
calculating the operating power according to the power base and the power coefficient, the power base correspondence recording power bases corresponding to different feature measures and different initial temperatures, and the power coefficient correspondence recording power coefficients corresponding to different food groups.

Optionally, the step of determining operating power and/or operating time of the electromagnetic wave generation module according to the attribute information includes:
matching the operating power according to the food groups, the feature measure, and the initial temperature of the object to be processed in accordance with a preset power correspondence, the power correspondence recording operating power corresponding to different initial temperatures, different food groups, and different feature measures.

Optionally, the step of determining operating power and/or operating time of the electromagnetic wave generation module according to the attribute information includes:
matching a time base of the operating time according to the feature measure and the initial temperature of the object to be processed in accordance with a preset time base correspondence, and matching a time coefficient of the operating time according to the food groups in accordance with a preset time coefficient correspondence; and
calculating the operating time according to the time base and the time coefficient, the time base correspondence recording time bases corresponding to different feature measures and different initial temperatures, and the time coefficient correspondence recording time coefficients corresponding to different food groups.

Optionally, the step of determining operating power and/or operating time of the electromagnetic wave generation module according to the attribute information includes:
matching the operating time according to the food groups, the feature measure, and the initial temperature of the object to be processed in accordance with a preset time correspondence, the time correspondence recording operating time corresponding to different initial temperatures, different food groups, and different feature measures.

Optionally, the control method further includes:
obtaining a feature measure reflecting a weight of the object to be processed;
determining whether the feature measure is less than or equal to a preset lower limit threshold;
controlling the electromagnetic wave generation module to stop operating if YES; and
controlling the electromagnetic wave generation module to operate according to an operating parameter if NO.

Optionally, the control method further includes:
obtaining a feature measure reflecting a weight of the object to be processed;
determining whether the feature measure is more than or equal to a preset upper limit threshold;
controlling the electromagnetic wave generation module to stop operating if YES; and
controlling the electromagnetic wave generation module to operate according to an operating parameter if NO.

Optionally, the heating device further includes a matching module configured to adjust an own impedance to adjust a load impedance of the electromagnetic wave generation module. The step of obtaining a feature measure reflecting a weight of the object to be processed includes:
controlling the electromagnetic wave generation module to generate an electromagnetic wave signal of preset initial power;
adjusting the impedance of the matching module, and determining an impedance value of the matching module implementing optimal load matching of the electromagnetic wave generation module; and
determining the capacitance according to the impedance value.

Optionally, the step of obtaining a feature measure reflecting a weight of the object to be processed includes:
controlling the electromagnetic wave generation module to generate an electromagnetic wave signal of preset initial power;
adjusting a frequency of the electromagnetic wave signal in a candidate frequency interval, and determining a frequency value of the electromagnetic wave signal implementing optimal frequency matching of the cavity capacitor; and
determining the capacitance according to the frequency value.

Optionally, the food groups are divided according to a content range of a set substance, the set substance being water or protein.

The operating power is positively correlated with a content of the set substance in the food groups, and/or the operating time is positively correlated with the content of the set substance in the food groups.

According to the second aspect of the present invention, a heating device is provided, including:
a cavity capacitor, including a cavity configured for placement of an object to be processed and a radiation polar plate arranged in the cavity;
an electromagnetic wave generation module, electrically connected with the radiation polar plate of the cavity capacitor so as to generate an electromagnetic wave in the cavity capacitor to heat the object to be processed in the cavity capacitor; and
a controller, configured to perform any above-mentioned control method.

According to the present invention, an operating parameter of the electromagnetic wave generation module is determined according to the food group where the object to be processed is located, thereby reducing uneven heating and local overheating caused by different contents of substances in foods of different varieties as compared with using a fixed operating parameter.

Further, according to the present invention, the operating power of the electromagnetic wave generation module is matched according to a water content range and a weight of the object to be processed, so that the electromagnetic wave generation module can only output several electromagnetic wave signals of fixed power. Therefore, the control is simple, the circuit is simple, and the service life is long.

Particularly, it is creatively found by the inventor of the present application that, although it theoretically seems right to keep the operating power and operating time of the electromagnetic wave generation module in linear relations with water contents of foods, many users do not know clearly about water contents of foods, so it is impossible to achieve good technical effects based on water contents with relatively big errors input by the users or obtained by detection, and particularly for foods containing unevenly distributed substances, the problem that part of the food is still relatively cold while the other part has been cooked (for example, the fat part of streaky pork is cooked first) arises easily. By overcoming a technology bias of the prior art, it is creatively found by the inventor of the present application that power and time may be segmented rather than linearly selected strictly according to water contents. In the present invention, foods of different varieties are divided into food groups appropriately. Therefore, higher tolerance is achieved, weight and temperature detection errors may be tolerated, and uneven heating caused by uneven distributions of substances in the foods is avoided. Moreover, when the food groups are input by a user, the user has no need to know about a water content of each variety, so a requirement on the user is reduced.

Further, according to the present invention, the weight of the object to be processed is reflected by the capacitance of the cavity capacitor, and it is unnecessary to input the weight of the object to be processed manually by a user (based on experience or by measurement), or arrange any weighing sensor additionally in the cavity capacitor. Therefore, the cost is reduced, and the error tolerance rate is increased.

The above, as well as other objectives, advantages and features of the present invention will be better understood by those skilled in the art according to the following detailed descriptions made to specific embodiments of the present invention in conjunction with the accompanying drawings.

### BRIEF DESCRIPTION OF THE DRAWINGS

In the following part, some specific embodiments of the present invention will be described in detail in an exemplary rather than limited manner with reference to the accompanying drawings. The same reference numerals in the accompanying drawings indicate the same or similar components or parts. Those skilled in the art should understand that these accompanying drawings are not necessarily drawn to scale. In figures:
FIG. 1 is a schematic structural diagram of a heating device according to an embodiment of the present invention.
FIG. 2 is a schematic structural diagram of a controller in FIG. 1.
FIG. 3 is a schematic circuit diagram of a matching module according to an embodiment of the present invention.
FIG. 4 is a schematic flowchart of a control method for a heating device according to an embodiment of the present invention.
FIG. 5 is a schematic flowchart of determining whether a cavity capacitor is non-loaded or overloaded according to an embodiment of the present invention.
FIG. 6 is a schematic flowchart of obtaining a capacitance of a cavity capacitor according to an embodiment of the present invention.
FIG. 7 is a schematic flowchart of obtaining a capacitance of a cavity capacitor according to another embodiment of the present invention.
FIG. 8 is a detailed flowchart of a control method for a heating device according to an embodiment of the present invention.

### DETAILED DESCRIPTION

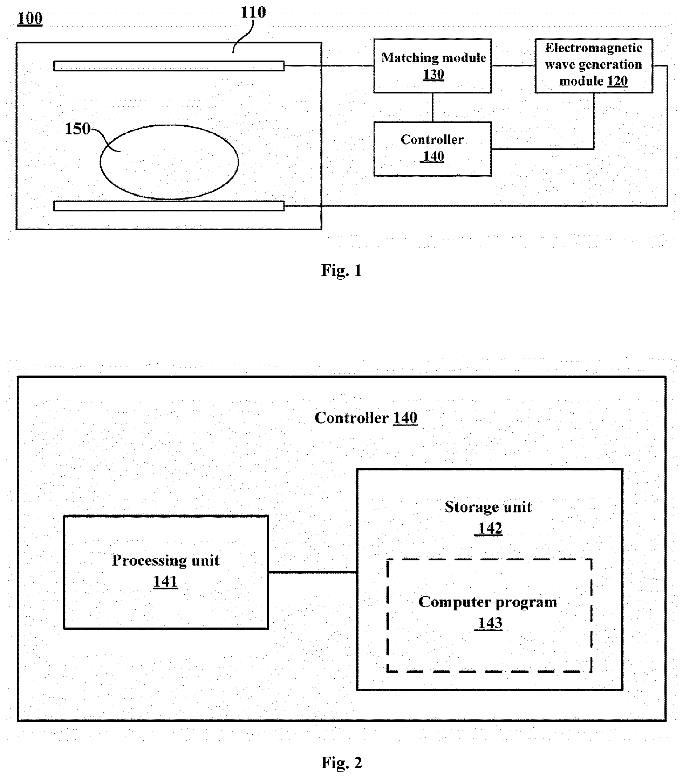

FIG. 1 is a schematic structural diagram of a heating device 100 according to an embodiment of the present invention. Referring to FIG. 1, the heating device 100 may include a cavity capacitor 110, an electromagnetic wave generation module 120, and a controller 140.

Specifically, the cavity capacitor 110 includes a cavity configured for placement of an object to be processed 150 and a radiation polar plate arranged in the cavity. In some embodiments, a receiving polar plate may further be arranged in the cavity, so as to form a capacitor with the radiation polar plate. In some other embodiments, the cavity may be made of a metal, so as to form, as a receiving polar plate, a capacitor with the radiation polar plate.

The electromagnetic wave generation module 120 may be configured to generate an electromagnetic wave signal, and is electrically connected with the radiation polar plate of the cavity capacitor 110 so as to generate an electromagnetic wave in the cavity capacitor 110 to heat the object to be processed 150 in the cavity capacitor 110.

FIG. 2 is a schematic structural diagram of the controller 140 in FIG. 1. Referring to FIG. 2, the controller 140 may include a processing unit 141 and a storage unit 142. The storage unit 142 stores a computer program 143. The computer program 143, when executed by the processing unit 141, is used for implementing a control method of the embodiments of the present invention.

Particularly, the processing unit 141 may be configured to, after acquiring a heating instruction, determine or obtain attribute information of the object to be processed 150, determine one or more operating parameters of the electromagnetic wave generation module 120 according to the attribute information, and control the electromagnetic wave generation module 120 to operate according to the one or more operating parameters.

The attribute information includes at least food groups, and each of the food groups may include at least one food variety. The quantity of the food groups is two or more than two. The operating parameter may be operating power and operating time.

According to the heating device 100 of the present invention, the operating parameter of the electromagnetic wave generation module 120 is determined according to the food group where the object to be processed 150 is located, thereby reducing uneven heating and local overheating caused by different contents of substances in foods of different varieties as compared with using a fixed operating parameter.

In the present invention, the food groups may be input by a user, or determined by image recognition, spectral recognition, or the like.

The food groups may be divided according to a content of a set substance, the set substance being water or protein. A specific heat capacity of a food is substantially positively correlated with contents of water and proteins, so the food groups may be divided according to specific heat capacities of foods.

In some embodiments, the operating power of the electromagnetic wave generation module 120 may be positively correlated with a content of a set substance in the food groups, and/or the operating time of the electromagnetic wave generation module 120 may be positively correlated with the content of the set substance in the food groups. Therefore, the heating efficiency is ensured, and meanwhile, safety hazards caused by local overheating of a food and overheating of a power amplifier of the electromagnetic wave generation module 120 are avoided.

Particularly, it is creatively found by the inventor of the present application that, although it theoretically seems right to keep the operating power and operating time of the electromagnetic wave generation module 120 in linear relations with contents of substances in foods, many users do not know clearly about contents of substances in foods, so it is impossible to achieve good technical effects based on contents of substances with relatively big errors input by the users or obtained by detection, and particularly for foods containing unevenly distributed substances, the problem that part of the food is still relatively cold while the other part has been cooked (for example, the fat part of streaky pork is cooked first) arises easily. By overcoming a technology bias of the prior art, it is creatively found by the inventor of the present application that power and time may be segmented rather than linearly selected strictly according to a content of a substance. In the present invention, foods of different varieties are divided into food groups appropriately. Therefore, higher tolerance is achieved, weight and temperature detection errors may be tolerated, and uneven heating caused by uneven distributions of substances in the foods is avoided. Moreover, when the food groups are input by a user, the user has no need to know about a content of a substance in each variety, so a requirement on the user is reduced.

Specifically, in a first group of embodiments, the attribute information of the object to be processed further includes a feature measure reflecting a weight of the object to be processed 150, so as to match a more suitable operating parameter. The operating power of the electromagnetic wave generation module 120 may be determined according to the food groups of the object to be processed 150 and the feature measure reflecting the weight of the object to be processed 150. The operating time of the electromagnetic wave generation module 120 may be determined according to the food groups of the object to be processed 150 and the feature measure reflecting the weight of the object to be processed 150.

In some further embodiments, the processing unit 141 may be configured to match a power base of the operating power according to the feature measure reflecting the weight of the object to be processed 150 in accordance with a preset power base correspondence, match a power coefficient of the operating power according to the food groups of the object to be processed 150 in accordance with a preset power coefficient correspondence, and calculate the operating power according to the power base and the power coefficients, so as to facilitate the design and modification of a control program. The power base correspondence records power bases corresponding to different feature measures. The power coefficient correspondence records power coefficients corresponding to different food groups.

The processing unit 141 may be configured to match a time base of the operating time according to the feature measure reflecting the weight of the object to be processed 150 in accordance with a preset time base correspondence, match a time coefficient of the operating time according to the food groups of the object to be processed 150 in accordance with a preset time coefficient correspondence, and calculate the operating time according to the time base and the time coefficient, so as to facilitate the design and modification of the control program. The time base correspondence records time parameters corresponding to different feature measures. The time coefficient correspondence records time coefficients corresponding to different food groups. The power coefficient and the time coefficient may be unequal.

For example, foods are divided into a first food group and a second food group. A water content range of the first food group may be more than or equal to 60%, e.g., lean pork, beef, mutton, chicken, duck, and fish fillets. A water content range of the second food group may be less than 60%, e.g., streaky pork, chicken feet, fish, pig's feet, pork ribs, and shrimps. A power base corresponding to 100 to 250 g is 50 W, a time base corresponding to 100 to 150 g is 7 min, a time base corresponding to 150 to 200 g is 8 min, and a time base corresponding to 200 to 250 g is 9 min. A power base corresponding to 250 to 1,500 g is 100 W, a time base corresponding to 250 to 300 g is 10 min, a time base corresponding to 300 to 350 g is 11 min, and in a similar fashion, a time base corresponding to 1,450 to 1,500 g is 35 min. Both a power coefficient and a time coefficient of the first food group are 1. A power coefficient of the second food group is 0.5, while a time coefficient thereof is 0.6.

In some other further embodiments, the processing unit 141 may be configured to directly match the operating power according to the food groups and the feature measure of the object to be processed 150 in accordance with a preset power correspondence. The power correspondence records operating power corresponding to different food groups and different feature measures.

The processing unit 141 may be configured to directly match the operating time according to the food groups and the feature measure of the object to be processed 150 in accordance with a preset time correspondence. The time correspondence records operating time corresponding to different food groups and different feature measures. In the present invention, the correspondences may be stored in the storage unit 142 in form of a table, a formula, etc.

In a second group of embodiments, a method for determining the operating power and the operating time differs from that in the first group of embodiments in that the attribute information of the object to be processed may further include an initial temperature of the object to be processed 150. The operating power and operating time of the electromagnetic wave generation module 120 may be determined according to the food groups, the feature measure, and the initial temperature of the object to be processed 150, so as to further avoid the object to be processed being too cold or too hot to further improve the heating efficiency.

In some further embodiments, the processing unit 141 may be configured to match a power base of the operating power according to the feature measure and the initial temperature in accordance with a preset power base correspondence, match a power coefficient of the operating power according to the food groups in accordance with a preset power coefficient correspondence, and calculate the operating power according to the power base and the power coefficient. The power base correspondence may record power bases corresponding to different feature measures and different initial temperatures. The power coefficient correspondence may record power coefficients corresponding to different food groups. The operating power may be obtained by multiplying the power base and the power coefficient.

The processing unit 141 may be configured to match a time base of the operating time according to the feature measure and the initial temperature in accordance with a preset time base correspondence, match a time coefficient of the operating time according to the food groups in accordance with a preset time coefficient correspondence, and calculate the operating time according to the time base and the time coefficient. The time base correspondence may record time bases corresponding to different feature measures and different initial temperatures. The time coefficient correspondence may record time coefficients corresponding to different food groups. The operating time may be obtained by multiplying the time base and the time coefficient. The power coefficient and the time coefficient may be unequal.

For example, foods are divided into a first food group and a second food group. A water content range of the first food group may be more than or equal to 60%, e.g., lean pork, beef, mutton, chicken, duck, and fish fillets. A water content range of the second food group may be less than 60%, e.g., streaky pork, chicken feet, fish, pig's feet, pork ribs, and shrimps. A power base corresponding to 100 to 250 g is 50 W, and a power base corresponding to 250 to 1,500 g is 100 W. A time base corresponding to 100 to 250 g and an initial temperature of less than or equal to -15°C is 7 min, a time base corresponding to 100 to 250 g and an initial temperature of above -15°C and less than or equal to -10°C is 5 min, and a time base corresponding to 100 to 250 g and an initial temperature of above -10°C and less than or equal to -5°C is 2 min. A time base corresponding to 250 to 500 g and an initial temperature of less than or equal to -15°C is 13 min, a time base corresponding to 250 to 500 g and an initial temperature of above -15°C and less than or equal to -10°C is 9 min, a time base corresponding to 250 to 500 g and an initial temperature of above -10°C and less than or equal to -5°C is 3 min, and so on. Both a power coefficient and a time coefficient of the first food group are 1. A power coefficient of the second food group is 0.5, while a time coefficient thereof is 0.6.

In some other further embodiments, the processing unit 141 may be configured to directly match the operating power according to the food groups, the feature measure, and the initial temperature in accordance with a preset power correspondence. The power correspondence may record operating power corresponding to different food groups and different feature measures under different initial temperatures.

The processing unit 141 may be configured to directly match the operating time according to the food groups, the feature measure, and the initial temperature in accordance with a preset time correspondence. The time correspondence may record operating time corresponding to different food groups and different feature measures under different initial temperatures.

In a third group of embodiments, a method for determining the operating power and the operating time differs from that in the first group of embodiments in that the operating time may be determined according to the feature measure of the object to be processed 150.

For example, the processing unit 141 may be configured to match the operating power according to the food groups and the feature measure in accordance with a preset power correspondence, and match the operating time according to the feature measure in accordance with a preset time correspondence. The power correspondence records operating power corresponding to different food groups and different feature measures. The time correspondence records operating time corresponding to different feature measures.

In a fourth group of embodiments, a method for determining the operating power and the operating time differs from that in the first group of embodiments in that the operating time may be determined according to the feature measure and the initial temperature of the object to be processed 150.

For example, the processing unit 141 may be configured to match the operating power according to the food groups and the feature measure in accordance with a preset power correspondence, and match the operating time according to the feature measure and the initial temperature in accordance with a preset time correspondence. The power correspondence records operating power corresponding to different food groups and different feature measures. The time correspondence records operating time corresponding to different feature measures and different initial temperatures.

In a fifth group of embodiments, a method for determining the operating power and the operating time differs from that in the first or second group of embodiments in that the operating power of the electromagnetic wave generation module 120 may be determined according to the feature measure of the object to be processed 150.

For example, the processing unit 141 may be configured to match the operating power according to the feature measure in accordance with a preset power correspondence, and match the operating time according to the food groups and the feature measure in accordance with a preset time correspondence. The power correspondence records operating power corresponding to different feature measures. The time correspondence records operating time corresponding to different food groups and different feature measures.

For example, the processing unit 141 may be configured to match the operating power according to the feature measure in accordance with a preset power correspondence, and match the operating time according to the food groups, the feature measure, and the initial temperature in accordance with a preset time correspondence. The power correspondence records operating power corresponding to different feature measures. The time correspondence records operating time corresponding to different food groups, different feature measures, and different initial temperatures.

In a sixth group of embodiments, the operating power of the electromagnetic wave generation module 120 may be determined according to the food groups of the object to be processed 150 only. The operating time may be determined according to the method for determining the operating time in any one of the above-mentioned embodiments.

For example, the processing unit 141 may be configured to match the operating power according to the food groups of the object to be processed 150 in accordance with a preset power correspondence. The processing unit 141 may further be configured to match the operating time according to the feature measure in accordance with a preset time correspondence. The power correspondence records operating power corresponding to different food groups. The time correspondence records operating time corresponding to different feature measures.

In some embodiments, the processing unit 141 may be configured to, when the feature measure is less than or equal to a preset lower limit threshold, control the electromagnetic wave generation module 120 to stop operating, so as to avoid an excessively small feature measure of the object to be processed 150 causing burnout of the electromagnetic wave generation module 120 when the heating device 100 has no matching function and causing serious heating of a matching module or a variable-frequency source to result in the reduction of the heating efficiency as well as potential safety hazards when the heating device 100 has a matching function; and when the feature measure is more than or equal to a preset upper limit threshold, control the electromagnetic wave generation module 120 to stop operating so as to avoid an excessively large feature measure of the object to be processed 150 causing a poor heating effect. The lower limit threshold and the upper limit threshold may be determined according to a volume of the cavity capacitor 110 and a configuration of the matching module (or the variable-frequency source). In some exemplary embodiments, a weight of the object to be processed corresponding to the lower limit threshold may be 100 g, and a weight of the object to be processed corresponding to the upper limit threshold may be 1,500 g.

In some embodiments, the heating device 100 may further include an interaction module, configured to send a visual signal or an acoustic signal to a user. The processing unit 141 may further be configured to, when the feature measure is less than or equal to the preset lower limit threshold, control the interaction module to send a visual and/or acoustic signal indicating no-loading to the user, and when the feature measure is more than or equal to the preset upper limit threshold, control the interaction module to send a visual and/or acoustic signal indicating overloading to the user. Therefore, user experiences are improved.

In some embodiments, the feature measure reflecting the weight of the object to be processed 150 may be the weight, which may be measured by a weighing sensor.

In some other embodiments, the feature measure reflecting the weight of the object to be processed 150 may be a capacitance of the cavity capacitor 110.

According to the heating device 100 of the present invention, the weight of the object to be processed 150 is reflected by the capacitance of the cavity capacitor 110, and it is unnecessary to input the weight of the object to be processed 150 manually by a user (based on experience or by measurement), or arrange any weighing sensor additionally in the cavity capacitor 110. Therefore, the cost is reduced, and the error tolerance rate is increased. Particularly, the capacitance of the cavity capacitor 110 comprehensively reflects the weight and temperature of the object to be processed 150, and is particularly suitable for the first group of embodiments of the present invention with an excellent heating effect.

In some embodiments, the heating device 100 further includes a matching module 130. The matching module 130 may be connected in series between the electromagnetic wave generation module 120 and the cavity capacitor 110 or in parallel with two ends of the cavity capacitor 110, and is configured to adjust an own impedance to adjust a load impedance of the electromagnetic wave generation module 120, so as to implement load matching and improve the heating efficiency.

The processing unit 141 may be configured to control the electromagnetic wave generation module 120 to generate an electromagnetic wave signal of preset initial power, adjust the impedance of the matching module 130 for load matching, determine an impedance value of the matching module 130 implementing optimal load matching of the electromagnetic wave generation module 120, and further determine the capacitance of the cavity capacitor according to the impedance value of the matching module 130 implementing optimal load matching.

The matching module 130 may include multiple matching branches that may be switched on and off independently. The processing unit 141 may further be configured to traverse on-off combinations of the multiple matching branches, obtain a matching degree parameter corresponding to each on-off combination and reflecting a load matching degree of the electromagnetic wave generation module 120, compare the matching degree parameters corresponding to the on-off combinations of the multiple matching branches, and determine the on-off combination implementing optimal load matching and an impedance value corresponding to the on-off combination according to a comparison result.

Specifically, the storage unit 142 may store a pre-configured number set. The number set may include combination numbers of the on-off combinations of the multiple matching branches, and the combination numbers correspond to impedance values of the matching module 130. Furthermore, the processing unit 141 may be configured to, after acquiring a heating instruction, obtain the pre-configured number set, determine branch numbers of the matching branches corresponding to each combination number according to the number set, and control the corresponding matching branches to be switched on and off according to the branch numbers to implement the traversing of the on-off combinations of the multiple matching branches.

According to the heating device 100 of the present invention, each on-off combination and each matching branch of the matching module 130 are numbered, so that the matching branches corresponding to each on-off combination can be matched rapidly to be switched on and off during the determination of the impedance value of the matching module 130 implementing optimal load matching of the electromagnetic wave generation module 120. Further, time required for determining the capacitance of the cavity capacitor 110 is shortened, and user experiences are improved greatly.

The branch numbers of the multiple matching branches may sequentially be the 0th to (n-1)-th power of a constant A. The combination number may be a sum of the branch numbers of the matching branches that are switched on in the on-off combination. Therefore, the only one group of matching branches that are switched on may be determined accurately according to the branch numbers only. The constant A may be 2, 3, 4, or the like, and n is the quantity of the matching branches. In the present invention, the constant A may be 2, so that a storage space occupied by the numbers can be reduced, and the matching efficiency is improved.

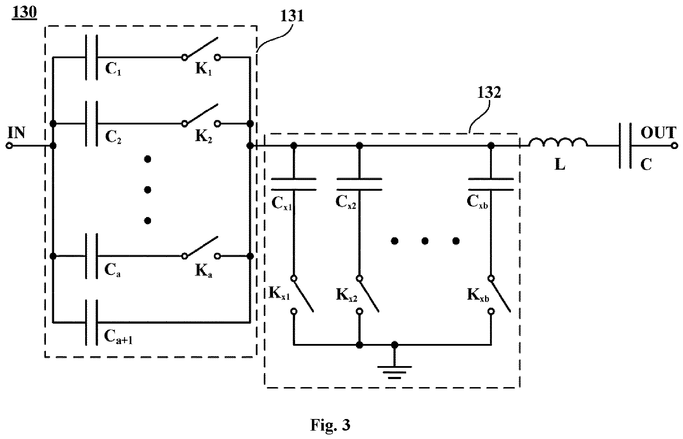

FIG. 3 is a schematic circuit diagram of a matching module 130 according to an embodiment of the present invention. Referring to FIG. 3, in some further embodiments, the matching module 130 may include a first matching unit 131 connected in series between the electromagnetic wave generation module 120 and the cavity capacitor 110, and a second matching unit 132 of which one end is electrically connected between the first matching unit 131 and the cavity capacitor 110 while the other end is grounded. Each of the first matching unit 131 and the second matching unit 132 may include multiple matching branches connected in parallel. Each of the matching branches includes a constant capacitor and a switch. Therefore, the circuit is simple, and meanwhile, the reliability and adjustment range of the matching module 130 are improved to further improve the obtained impedance value of the matching module 130 implementing optimal load matching.

Capacitance values of constant capacitors of the multiple second matching units 132 of the first matching unit 131 and the second matching unit 132 may be unequal. A capacitance value of a minimum constant capacitor of the second matching unit 132 may be greater than that of a maximum constant capacitor of the first matching unit 131. Multiple branch numbers may sequentially increase according to the capacitance values of the corresponding matching branches.

Referring to FIG. 3, capacitance values of capacitors C1, C2, ..., and Ca of the first matching unit 131 sequentially increase, capacitance values of capacitors Cx1, Cx2, ..., and Cxb (a+b=n) of the second matching unit 132 sequentially increase, and the capacitance value of Cx1 is greater than that of the capacitor Ca. In an embodiment where the constant A is 2, the matching branches corresponding to C1, C2, ..., Ca, Cx1, Cx2, ..., and Cxb may be sequentially numbered as 20, 21, ..., 2a-1, 2a, 2a+1, ..., and 2n-1.

According to the numbering method of the present invention, the combination number may be directly compared with a preset impedance threshold to determine the impedance of the matching module 130. Therefore, a control flow is simplified, and matching time of the heating device 100 is further shortened.

According to a resonant frequency calculation formula f=1/(2π•sqrt(L•C)), for the same heating device 100 (an inductance L remains unchanged), when a capacitance value C of the cavity capacitor 110 changes due to the placement of different objects to be processed 150 therein, a resonant frequency f suitable for the cavity capacitor 110 also changes. In some other embodiments, the electromagnetic wave generation module 120 may include a variable-frequency source and a power amplifier.

The processing unit 141 may be configured to, after acquiring a heating instruction, control the electromagnetic wave generation module 120 to generate an electromagnetic wave signal of preset initial power, adjust a frequency of the electromagnetic wave signal generated by the electromagnetic wave generation module 120 in a candidate frequency interval, determine a frequency value of the electromagnetic wave signal implementing optimal frequency matching of the cavity capacitor 110, and further determine the capacitance of the cavity capacitor 110 according to the frequency value implementing optimal frequency matching.

A minimum value of the candidate frequency interval may be 32 to 38 MHz, while a maximum value thereof may be 42 to 48 MHz. Therefore, the transmittance of an electromagnetic wave is improved, and even heating is implemented. For example, the candidate frequency interval is 32 to 48 MHz, 35 to 48 MHz, 35 to 45 MHz, 38 to 45 MHz, or 38 to 42 MHz.

The processing unit 141 may be configured to adjust the frequency of the electromagnetic wave signal in the candidate frequency interval by a bisection method to gradually narrow a frequency approximation interval implementing optimal frequency matching to a minimum approximation interval, and further determine the frequency value of the electromagnetic wave signal implementing optimal frequency matching.

Specifically, the processing unit 141 may be configured to adjust the frequency of the electromagnetic wave signal to a minimum value, an intermediate value and a maximum value of the frequency approximation interval to obtain a matching degree parameter corresponding to each frequency and reflecting a frequency matching degree of the cavity capacitor 110 for comparison, redetermine a frequency approximation interval according to a comparison result, repeat the operations until the frequency approximation interval is the minimum approximation interval, adjust the frequency of the electromagnetic wave signal to a minimum value, an intermediate value and a maximum value of the minimum approximation interval to obtain a matching degree parameter corresponding to each frequency and reflecting a frequency matching degree of the cavity capacitor 110 for comparison, and determine an optimal frequency value according to a comparison result. The initial frequency approximation interval may be the above-mentioned candidate frequency interval.

According to the heating device 100 of the present invention, the frequency value implementing optimal frequency matching is determined in the candidate frequency interval by the bisection method. Therefore, a range of the interval where the optimal frequency value is located may be narrowed rapidly, the optimal frequency value may further be determined rapidly, time required for determining the capacitance of the cavity capacitor 110 is shortened, and user experiences are improved greatly.

It is to be noted that, in the present invention, the minimum approximation interval is a minimum range of the frequency approximation interval, i.e., the accuracy of the optimal frequency value, rather than an interval of a specific frequency range. In some embodiments, the minimum approximation interval may be any numerical value from 0.2 to 20 KHz, such as 0.2 KHz, 1 KHz, 5 KHz, 10 KHz, or 20 KHz. A time interval between two adjustments of the frequency of the electromagnetic wave signal may be 10 to 20 ms, such as 10 ms, 15 ms, or 20 ms.

In some embodiments, the variable-frequency source may be a voltage-controlled oscillator, of which an input voltage corresponds to an output frequency. The processing unit 141 may be configured to determine the capacitance of the cavity capacitor 110 according to the input voltage of the voltage-controlled oscillator.

In the present invention, optimal load matching of the electromagnetic wave generation module 120 and optimal frequency matching of the cavity capacitor 110 refer to that a proportion of output power allocated to the cavity capacitor 110 by the electromagnetic wave generation module 120 in the same heating device is maximum.

In the present invention, the preset initial power may be 10 to 20 W, such as 10 W, 15 W, or 20 W. Therefore, energy is saved, and meanwhile, the accuracy of the obtained impedance value implementing optimal load matching or the obtained frequency value implementing optimal frequency matching is high.

In some embodiments, the heating device 100 may further include a bidirectional coupler connected in series between the cavity capacitor 110 and the electromagnetic wave generation module 120 and configured to monitor a forward power signal output by the electromagnetic wave generation module 120 and a backward power signal returned to the electromagnetic wave generation module 120 in real time.

The processing unit 141 may further be configured to, after the impedance value of the matching module 130 or the frequency of the electromagnetic wave signal is adjusted each time, obtain the forward power signal output by the electromagnetic wave generation module 120 and the backward power signal returned to the electromagnetic wave generation module 120, and calculate the matching degree parameter according to the forward power signal and the backward power signal.

The matching degree parameter may be a return loss S 11, which may be calculated according to the following formula: S11=-20log(backward power/forward power). In this embodiment, the smaller the numerical value of the return loss S 11 is, the higher a load matching degree of the electromagnetic wave generation module 120 or a frequency matching degree of the cavity capacitor 110 is. An impedance value or frequency value corresponding to a minimum return loss S11 is the impedance value implementing optimal load matching or the frequency value implementing optimal frequency matching.

The matching degree parameter may alternatively be an electromagnetic wave absorption rate, which can be calculated according to the following formula: electromagnetic wave absorption rate=(1-backward power/forward power). In this embodiment, the larger the numerical value of the electromagnetic wave absorption rate is, the higher the load matching degree of the electromagnetic wave generation module 120 or the frequency matching degree of the cavity capacitor 110 is. An impedance value or frequency value corresponding to a maximum electromagnetic wave absorption rate is the impedance value implementing optimal load matching or the frequency value implementing optimal frequency matching.

The matching degree parameter may alternatively be other parameters capable of reflecting a proportion of output power allocated to the cavity capacitor 110 by the electromagnetic wave generation module 120.

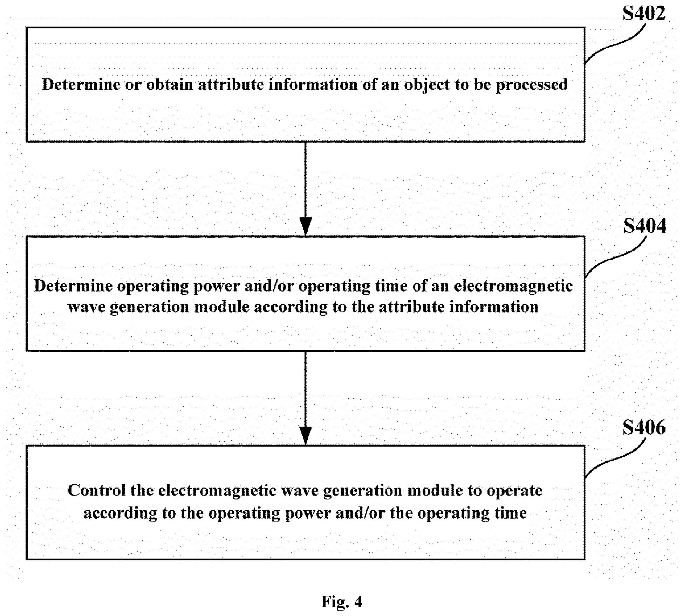

FIG. 4 is a schematic flowchart of a control method for a heating device 100 according to an embodiment of the present invention. Referring to FIG. 4, the control method for the heating device 100 in the present invention may include the following steps.

In step S402, attribute information of an object to be processed 150 is determined or obtained. In this step, the attribute information may at least include food groups. The food groups may be input by a user, or determined by image recognition, spectral recognition, or the like. Each of the food groups may include at least one food variety. The quantity of the food groups is two or more than two.

In step S404, operating power and/or operating time of an electromagnetic wave generation module 120 are/is determined according to the food groups.

In step S406, the electromagnetic wave generation module 120 is controlled to operate according to the operating power and/or the operating time.

According to the control method of the present invention, an operating parameter of the electromagnetic wave generation module 120 is determined according to the food group where the object to be processed 150 is located, thereby reducing uneven heating and local overheating caused by different contents of substances in foods of different varieties as compared with using a fixed operating parameter.

Specifically, in a first group of embodiments, the attribute information may further include a feature measure reflecting a weight of the object to be processed 150, so as to match a more suitable operating parameter. Before the step S404 , the method may further include a step that the feature measure reflecting the weight of the object to be processed 150 is obtained.

In some further embodiments, when the operating power of the electromagnetic wave generation module 120 is determined according to the attribute information, the step S404 may include the following steps.

A power base of the operating power is matched according to the feature measure in accordance with a preset power base correspondence, and a power coefficient of the operating power is matched according to the food groups in accordance with a preset power coefficient correspondence.

The operating power is calculated according to the power base and the power coefficient, so as to facilitate the design and modification of a control program. The power base correspondence may record power bases corresponding to different feature measures, and the power coefficient correspondence may record power coefficients corresponding to different food groups.

When the operating time of the electromagnetic wave generation module 120 is determined according to the attribute information, the step S404 may include the following steps.

A time base of the operating time is matched according to the feature measure in accordance with a preset time base correspondence, and a time coefficient of the operating time is matched according to the food groups in accordance with a preset time coefficient correspondence.

The operating time is calculated according to the time base and the time coefficient, so as to facilitate the design and modification of the control program. The time base correspondence may record time bases corresponding to different feature measures, and the time coefficient correspondence may record time coefficients corresponding to different food groups. The power coefficient and the time coefficient may be unequal.

In some further embodiments, when the operating power of the electromagnetic wave generation module 120 is determined according to the attribute information, the step S404 may include the following step.

The operating power is matched according to the food groups and the feature measure in accordance with a preset power correspondence, the power correspondence recording operating power corresponding to different food groups and different feature measures.

When the operating time of the electromagnetic wave generation module 120 is determined according to the attribute information, the step S404 may include the following step.

The operating time is matched according to the food groups and the feature measure in accordance with a preset time correspondence, the time correspondence recording operating time corresponding to different food groups and different feature measures.

In a second group of embodiments, a method for determining the operating power and the operating time differs from that in the first group of embodiments in that the attribute information may further include an initial temperature of the object to be processed 150. Before the step S404, the method may further include a step that the initial temperature of the object to be processed 150 is obtained.

In some further embodiments, when the operating power of the electromagnetic wave generation module 120 is determined according to the attribute information, the step S404 may include the following steps.

A power base of the operating power is matched according to the feature measure and the initial temperature in accordance with a preset power base correspondence, and a power coefficient of the operating power is matched according to the food groups in accordance with a preset power coefficient correspondence.

The operating power is calculated according to the power base and the power coefficient, so as to further avoid the object to be processed being too cold or too hot to further improve the heating efficiency. The power base correspondence records power bases corresponding to different feature measures and different initial temperatures, and the power coefficient correspondence records power coefficients corresponding to different food groups.

When the operating time of the electromagnetic wave generation module 120 is determined according to the attribute information, the step S404 may include the following steps.

A time base of the operating time is matched according to the feature measure and the initial temperature in accordance with a preset time base correspondence, and a time coefficient of the operating time is matched according to the food groups in accordance with a preset time coefficient correspondence.

The operating time is calculated according to the time base and the time coefficient, so as to further avoid the object to be processed being too cold or too hot to further improve the heating efficiency. The time base correspondence records time bases corresponding to different feature measures and different initial temperatures, and the time coefficient correspondence records time coefficients corresponding to different food groups.

In some other further embodiments, when the operating power of the electromagnetic wave generation module 120 is determined according to the attribute information, the step S404 may include the following step.

The operating power is matched according to the food groups, the feature measure and the initial temperature in accordance with a preset power correspondence, the power correspondence recording operating power corresponding to different initial temperatures, different food groups, and different feature measures.

When the operating time of the electromagnetic wave generation module 120 is determined according to the attribute information, the step S404 may include the following step.

The operating time is matched according to the food groups, the feature measure and the initial temperature in accordance with a preset time correspondence, the time correspondence recording operating time corresponding to different initial temperatures, different food groups, and different feature measures.

In a third group of embodiments, a method for determining the operating power and the operating time differs from that in the first group of embodiments in that, when the operating time of the electromagnetic wave generation module 120 is determined according to the attribute information, the step S404 may include the following step.

The operating time is matched according to the feature measure in accordance with a preset time correspondence, the time correspondence recording operating time corresponding to different feature measures.

In a fourth group of embodiments, a method for determining the operating power and the operating time differs from that in the first group of embodiments in that, before the step S404, the method may further include a step that an initial temperature of the object to be processed is obtained, and when the operating time of the electromagnetic wave generation module 120 is determined according to the attribute information, the step S404 may include the following step.

The operating time is matched according to the feature measure and the initial temperature in accordance with a preset time correspondence, the time correspondence recording operating time corresponding to different feature measures and different initial temperatures.

In a fifth group of embodiments, a method for determining the operating power and the operating time differs from that in the first or second group of embodiments in that, when the operating power of the electromagnetic wave generation module 120 is determined according to the attribute information, the step S404 may include the following step.

The operating power is matched according to the feature measure in accordance with a preset power correspondence, the power correspondence recording operating power corresponding to different feature measures.

In a sixth group of embodiments, a method for determining the operating power and the operating time differs from that in any one of the above groups of embodiments in that, when the operating power of the electromagnetic wave generation module 120 is determined according to the attribute information, the step S404 may include the following step.

The operating power is matched according to the food groups of the object to be processed 150 in accordance with a preset power correspondence, the power correspondence recording operating power corresponding to different food groups.

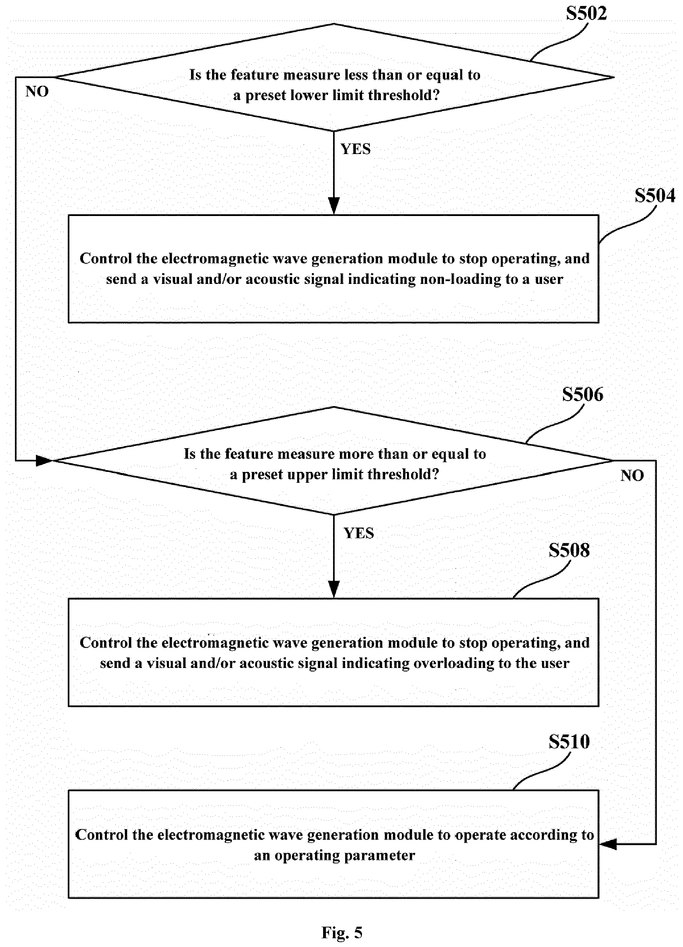

FIG. 5 is a schematic flowchart of determining whether a cavity capacitor 110 is no-loading or overloaded according to an embodiment of the present invention. Referring to FIG. 5, the determination of whether the cavity capacitor 110 is non-loaded or overloaded may include the following steps.

In step S502, whether the feature measure is less than or equal to a preset lower limit threshold is determined. Step S504 is performed if YES. Step S506 is performed if NO.

In the step S504, the electromagnetic wave generation module 120 is controlled to stop operating, and a visual and/or acoustic signal indicating non-loading is sent to a user, so as to avoid an excessively small feature measure of the object to be processed 150 causing a burnout of the electromagnetic wave generation module 120 when the heating device 100 has no matching function and causing serious heating of a matching module or a variable-frequency source to result in the reduction of the heating efficiency as well as potential safety hazards when the heating device 100 has a matching function.

In the step S506, whether the feature measure is more than or equal to a preset upper limit threshold is determined. Step S508 is performed if YES. Step S510 is performed if NO.

In the step S508, the electromagnetic wave generation module 120 is controlled to stop operating, and a visual and/or acoustic signal indicating overloading is sent to the user, so as to avoid an excessively large feature measure of the object to be processed 150 causing a poor heating effect.

In the step S510, the electromagnetic wave generation module 120 is controlled to operate according to an operating parameter.

In the embodiment shown in FIG. 5, the lower limit threshold and the upper limit threshold may be determined according to a volume of the cavity capacitor 110 and a configuration of the matching module (or the variable-frequency source).

In some embodiments, the feature measure reflecting the weight of the object to be processed 150 may be the weight, which may be measured by a weighing sensor.

In some other embodiments, the feature measure reflecting the weight of the object to be processed 150 may be a capacitance of the cavity capacitor 110.

According to the control method of the present invention, the weight of the object to be processed 150 is reflected by the capacitance of the cavity capacitor 110, and it is unnecessary to input the weight of the object to be processed 150 manually by the user (based on experience or by measurement), or arrange any weighing sensor additionally in the cavity capacitor 110. Therefore, the cost is reduced, and the error tolerance rate is increased.

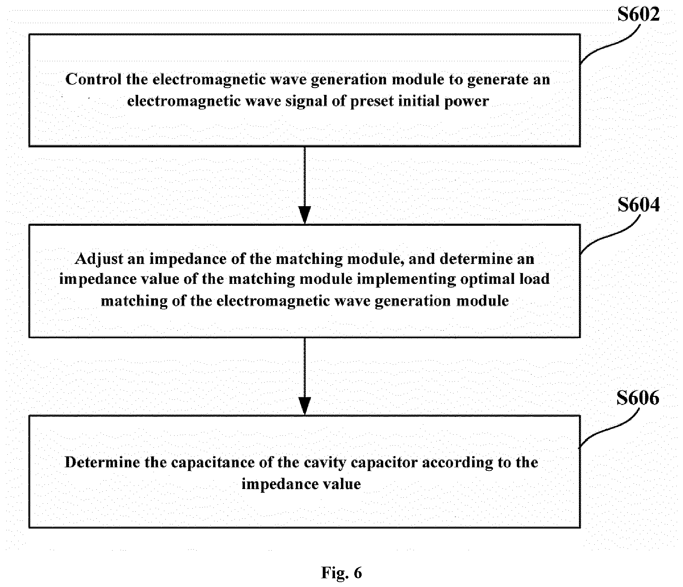

FIG. 6 is a schematic flowchart of obtaining a capacitance of a cavity capacitor 110 according to an embodiment of the present invention. Referring to FIG. 6, in some embodiments, the obtaining of the capacitance of the cavity capacitor 110 may include the following steps.

In step S602, the electromagnetic wave generation module 120 is controlled to generate an electromagnetic wave signal of preset initial power. In this step, the preset initial power may be 10 to 20 W, such as 10 W, 15 W, or 20 W. Therefore, energy is saved, and meanwhile, the accuracy of an obtained impedance value of a matching module 130 implementing optimal load matching is high.

In step S604, an impedance of the matching module 130 is adjusted, and an impedance value of the matching module 130 implementing optimal load matching of the electromagnetic wave generation module 120 is determined.

In step S606, the capacitance of the cavity capacitor 110 is determined according to the impedance value.

In some further embodiments, based on the matching module 130 including multiple matching branches that may be switched on and off independently, the step S604 may include the following steps.

A pre-configured number set is obtained.

Branch numbers of the matching branches corresponding to each combination number are determined one by one according to the number set, the corresponding matching branches are controlled to be switched on and off according to the branch numbers, after the matching branches corresponding to each on-off combination are switched on and off, a forward power signal output by the electromagnetic wave generation module 120 and a backward power signal returned to the electromagnetic wave generation module 120 are obtained, and a matching degree parameter is calculated according to the forward power signal and the backward power signal.

The matching degree parameters corresponding to the on-off combinations of the multiple matching branches are compared.

The on-off combination implementing optimal load matching and an impedance value corresponding to the on-off combination are determined according to a comparison result.

In this embodiment, the number set may include combination numbers of the on-off combinations of the multiple matching branches, and the combination numbers correspond to impedance values of the matching module 130.

The branch numbers of the multiple matching branches may sequentially be the 0th to (n-1)-th power of a constant A. The combination number may be a sum of the branch numbers of the matching branches that are switched on in the on-off combination. The constant A may be 2, 3, 4, or the like, and n is the quantity of the matching branches.

The forward power signal and the backward power signal may be detected by a bidirectional coupler. The matching degree parameter may be a return loss or an electromagnetic wave absorption rate. Specifically, the smaller a numerical value of the return loss, the higher a load matching degree of the electromagnetic wave generation module 120 is. An impedance value of the matching module 130 corresponding to a minimum return loss is the impedance value implementing optimal load matching. The larger a numerical value of the electromagnetic wave absorption rate is, the higher the load matching degree of the electromagnetic wave generation module 120 is. An impedance value of the matching module 130 corresponding to a maximum electromagnetic wave absorption rate is the impedance value implementing optimal load matching.

According to the control method of the present invention, each on-off combination and each matching branch of the matching module 130 are numbered, so that the matching branches corresponding to each on-off combination may be matched rapidly to be switched on and off during the determination of the impedance value of the matching module 130 implementing optimal load matching of the electromagnetic wave generation module 120. Further, time required for determining the capacitance of the cavity capacitor 110 is shortened, and user experiences are improved greatly.

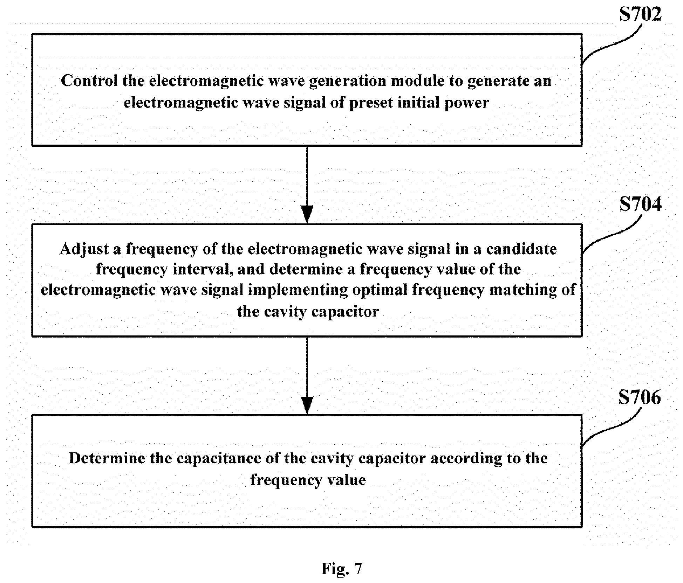

FIG. 7 is a schematic flowchart of obtaining a capacitance of the cavity capacitor 110 according to another embodiment of the present invention. Referring to FIG. 7, in some other embodiments, the obtaining of the capacitance of the cavity capacitor 110 may include the following steps.

In step S702, the electromagnetic wave generation module 120 is controlled to generate an electromagnetic wave signal of preset initial power. The preset initial power may be 10 to 20 W, such as 10 W, 15 W, or 20 W. Therefore, energy is saved, and meanwhile, the accuracy of an obtained frequency value implementing optimal frequency matching is high.

In step S704, a frequency of the electromagnetic wave signal is adjusted in a candidate frequency interval, and a frequency value of the electromagnetic wave signal implementing optimal frequency matching of the cavity capacitor 110 is determined. A minimum value of the candidate frequency interval may be 32 to 38 MHz, while a maximum value thereof may be 42 to 48 MHz. Therefore, the transmittance of an electromagnetic wave is improved, and even heating is implemented. For example, the candidate frequency interval is 32 to 48 MHz, 35 to 48 MHz, 35 to 45 MHz, 38 to 45 MHz, or 38 to 42 MHz.

In step S706, the capacitance of the cavity capacitor 110 is determined according to the frequency value.

In some further embodiments, the step S704 may be implemented by adjusting the frequency of the electromagnetic wave signal in the candidate frequency interval by a bisection method to gradually narrow a frequency approximation interval implementing optimal frequency matching to a minimum approximation interval, and determining the frequency value of the electromagnetic wave signal implementing optimal frequency matching. It specifically includes the following steps.

An initial frequency approximation interval is obtained, the initial frequency approximation interval being the above-mentioned candidate frequency interval.

The frequency of the electromagnetic wave signal is adjusted to a minimum value, an intermediate value and a maximum value of the frequency approximation interval, after the frequency of the electromagnetic wave signal is adjusted each time, a forward power signal output by the electromagnetic wave generation module 120 and a backward power signal returned to the electromagnetic wave generation module 120 are obtained, and a matching degree parameter corresponding to the frequency is calculated according to the forward power signal and the backward power signal. The forward power signal and the backward power signal may be detected by a bidirectional coupler connected in series between the cavity capacitor 110 and the electromagnetic wave generation module 120.

Matching degree parameters corresponding to each frequency are compared until the frequency approximation interval is a minimum approximation interval. The minimum approximation interval is a minimum range of the frequency approximation interval, i.e., the accuracy of the optimal frequency value, rather than an interval of a specific frequency range. In some embodiments, the minimum approximation interval may be any numerical value from 0.2 to 20 KHz, such as 0.2 KHz, 1 KHz, 5 KHz, 10 KHz, or 20 KHz.

The frequency value of the electromagnetic wave signal implementing optimal frequency matching is determined according to a comparison result.

According to the control method of the present invention, the frequency value implementing optimal frequency matching is determined in the candidate frequency interval by the bisection method. Therefore, a range of the interval where the optimal frequency value is located may be narrowed rapidly, the optimal frequency value may further be determined rapidly, time required for determining the capacitance of the cavity capacitor 110 is shortened, and user experiences are improved greatly.

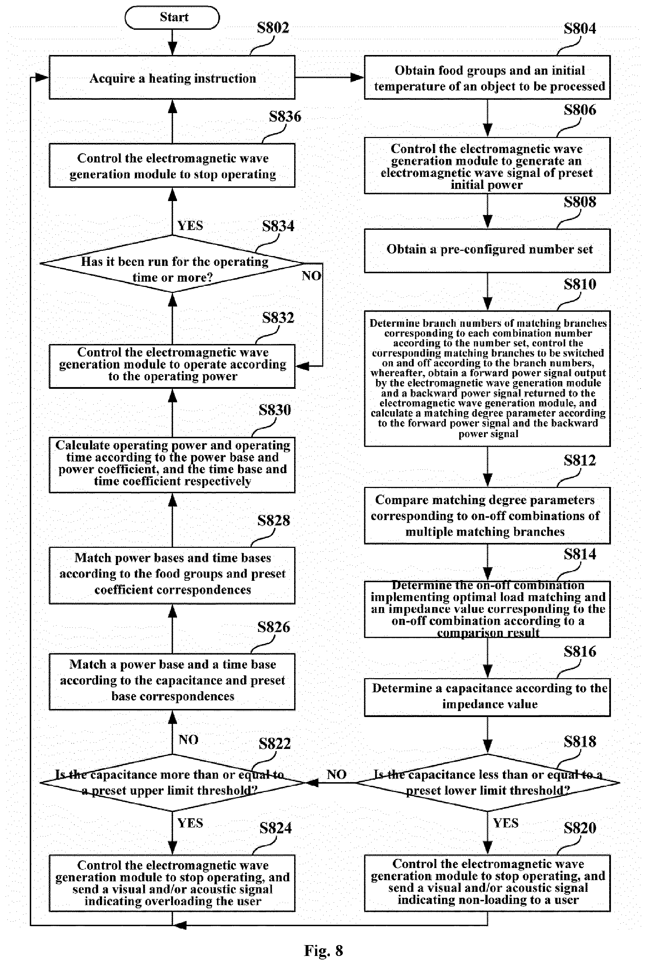

FIG. 8 is a detailed flowchart of a control method for the heating device 100 according to an embodiment of the present invention. Referring to FIG. 8, the control method for the heating device 100 in the present invention may include the following detailed steps.

In step S802, a heating instruction is acquired.

In step S804, food groups and an initial temperature of an object to be processed 150 are obtained.

In step S806, the electromagnetic wave generation module 120 is controlled to generate an electromagnetic wave signal of preset initial power.

In step S808, a pre-configured number set is obtained.

In step S810, branch numbers of matching branches corresponding to each combination number are determined one by one according to the number set, the corresponding matching branches are controlled to be switched on and off according to the branch numbers, after the matching branches corresponding to each on-off combination are switched on and off, a forward power signal output by the electromagnetic wave generation module and a backward power signal returned to the electromagnetic wave generation module 120 are obtained, and a matching degree parameter is calculated according to the forward power signal and the backward power signal.

In step S812, matching degree parameters corresponding to on-off combinations of multiple matching branches are compared.

In step S814, the on-off combination implementing optimal load matching and an impedance value corresponding to the on-off combination are determined according to a comparison result.

In step S816, a capacitance of the cavity capacitor 110 is determined according to the impedance value.

In step S818, whether the capacitance of the cavity capacitor 110 is less than or equal to a preset lower limit threshold is determined. Step S820 is performed if YES. Step S822 is performed if NO.

In the step S820, the electromagnetic wave generation module 120 is controlled to stop operating, and a visual and/or acoustic signal indicating non-loading is sent to a user. The process returns to step S802.

In the step S822, whether the capacitance of the cavity capacitor 110 is more than or equal to a preset upper limit threshold is determined. Step S824 is performed if YES. Step S826 is performed if NO.

In the step S824, the electromagnetic wave generation module 120 is controlled to stop operating, and a visual and/or acoustic signal indicating overloading is sent to the user. The process returns to step S802.

In the step S826, a power base and a time base are matched according to the capacitance of the cavity capacitor 110 and preset base correspondences.

In step S828, power bases and time bases are matched according to the food groups and preset coefficient correspondences.

In step S830, operating power and operating time are calculated according to the power base and power coefficient, and the time base and time coefficient respectively.

In step S832, the electromagnetic wave generation module 120 is controlled to operate according to the operating power.

In step S834, whether the electromagnetic wave generation module 120 has been run for the operating time or more is determined. Step S836 is performed if YES. Step S832 is performed if NO.

In step S836, the electromagnetic wave generation module 120 is controlled to stop operating. The process returns to step S802 to start a next cycle.

The heating device 100 and control method of the present invention are particularly applicable to food thawing, particularly food thawing to -4 to 0°C, i.e., the above-mentioned set temperature -4 to 0°C, and a more accurate feature measure value may be obtained.

## Claims

1. A control method for a heating device (100), the heating device (100) comprising an electromagnetic wave generation module (120) configured to generate an electromagnetic wave signal for heating an object to be processed (150), the control method comprising:
determining or obtaining attribute information of the object to be processed (150), the attribute information at least comprising food groups, and each of the food groups comprising at least one food variety;
determining operating power and/or operating time of the electromagnetic wave generation module (120) according to the attribute information; and
controlling the electromagnetic wave generation module (120) to operate according to the operating power and/or the operating time, wherein
the attribute information further comprises a feature measure reflecting a weight of the object to be processed (150), wherein
the step of determining operating power and/or operating time of the electromagnetic wave generation module (120) according to the attribute information comprises:
matching a power base of the operating power according to the feature measure in accordance with a preset power base correspondence, and matching a power coefficient of the operating power according to the food groups in accordance with a preset power coefficient correspondence;
calculating the operating power according to the power base and the power coefficient, the power base correspondence recording power bases corresponding to different feature measures, and the power coefficient correspondence recording power coefficients corresponding to different food groups, **characterized in that**
the heating device (100) further comprises a cavity capacitor (110) including a cavity configured for placement of the object to be processed (150) and a radiation polar plate arranged in the cavity, and the electromagnetic wave generation module (120) is electrically connected with the radiation polar plate of the cavity capacitor (110) so as to generate an electromagnetic wave in the cavity capacitor (110) to heat the object to be processed (150) in the cavity capacitor (110); and the feature measure is a capacitance of the cavity capacitor (110).

2. The control method according to claim 1, wherein the step of determining operating power and/or operating time of the electromagnetic wave generation module (120) according to the attribute information comprises:
matching the operating power according to the food groups and the feature measure in accordance with a preset power correspondence, the power correspondence recording operating power corresponding to different food groups and different feature measures.

3. The control method according to claim 1, wherein the step of determining operating power and/or operating time of the electromagnetic wave generation module (120) according to the attribute information comprises:
matching a time base of the operating time according to the feature measure in accordance with a preset time base correspondence, and matching a time coefficient of the operating time according to the food groups in accordance with a preset time coefficient correspondence; and
calculating the operating time according to the time base and the time coefficient, the time base correspondence recording time bases corresponding to different feature measures, and the time coefficient correspondence recording time coefficients corresponding to different food groups.

4. The control method according to claim 1, wherein the step of determining operating power and/or operating time of the electromagnetic wave generation module (120) according to the attribute information comprises:
matching the operating time according to the food groups and the feature measure in accordance with a preset time correspondence, the time correspondence recording operating time corresponding to different food groups and different feature measures.

5. The control method according to claim 1, wherein
the attribute information further comprises an initial temperature of the object to be processed (150).

6. The control method according to claim 5, wherein the step of determining operating power and/or operating time of the electromagnetic wave generation module (120) according to the attribute information comprises:
matching a power base of the operating power according to the feature measure and the initial temperature of the object to be processed (150) in accordance with a preset power base correspondence, and matching a power coefficient of the operating power according to the food groups in accordance with a preset power coefficient correspondence; and
calculating the operating power according to the power base and the power coefficient, the power base correspondence recording power bases corresponding to different feature measures and different initial temperatures, and the power coefficient correspondence recording power coefficients corresponding to different food groups; or
wherein the step of determining operating power and/or operating time of the electromagnetic wave generation module (120) according to the attribute information comprises:
matching the operating power according to the food groups, the feature measure, and the initial temperature of the object to be processed (150) in accordance with a preset power correspondence, the power correspondence recording operating power corresponding to different initial temperatures, different food groups, and different feature measures.

7. The control method according to claim 5, wherein the step of determining operating power and/or operating time of the electromagnetic wave generation module (120) according to the attribute information comprises:
matching a time base of the operating time according to the feature measure and the initial temperature of the object to be processed (150) in accordance with a preset time base correspondence, and matching a time coefficient of the operating time according to the food groups in accordance with a preset time coefficient correspondence; and
calculating the operating time according to the time base and the time coefficient, the time base correspondence recording time bases corresponding to different feature measures and different initial temperatures, and the time coefficient correspondence recording time coefficients corresponding to different food groups; or
wherein the step of determining operating power and/or operating time of the electromagnetic wave generation module (120) according to the attribute information comprises:
matching the operating time according to the food groups, the feature measure, and the initial temperature of the object to be processed (150) in accordance with a preset time correspondence, the time correspondence recording operating time corresponding to different initial temperatures, different food groups, and different feature measures.

8. The control method according to claim 1, further comprising:
obtaining a feature measure reflecting a weight of the object to be processed (150);
determining whether the feature measure is less than or equal to a preset lower limit threshold;
controlling the electromagnetic wave generation module (120) to stop operating if YES; and
controlling the electromagnetic wave generation module (120) to operate according to an operating parameter if NO; and/or
obtaining a feature measure reflecting a weight of the object to be processed (150);
determining whether the feature measure is more than or equal to a preset upper limit threshold;
controlling the electromagnetic wave generation module (120) to stop operating if YES; and
controlling the electromagnetic wave generation module (120) to operate according to an operating parameter if NO.

9. The control method according to claim 1, wherein the heating device (100) further comprises a matching module (130) configured to adjust an own impedance to adjust a load impedance of the electromagnetic wave generation module (120), wherein the step of obtaining a feature measure reflecting a weight of the object to be processed (150) comprises:
controlling the electromagnetic wave generation module (120) to generate an electromagnetic wave signal of preset initial power;
adjusting the impedance of the matching module (130), and determining an impedance value of the matching module (130) implementing optimal load matching of the electromagnetic wave generation module (120); and
determining the capacitance according to the impedance value; or
wherein the step of acquiring a feature measure reflecting a weight of the object to be processed (150) comprises:
controlling the electromagnetic wave generation module (120) to generate an electromagnetic wave signal of preset initial power;
adjusting a frequency of the electromagnetic wave signal in a candidate frequency interval, and determining a frequency value of the electromagnetic wave signal implementing optimal frequency matching of the cavity capacitor (110); and
determining the capacitance according to the frequency value.

10. The control method according to claim 1, wherein
the food groups are divided according to a content range of a set substance, the set substance being water or protein; and
the operating power is positively correlated with a content of the set substance in the food groups, and/or the operating time is positively correlated with the content of the set substance in the food groups.

11. A heating device (100), comprising:
a cavity capacitor (110), including a cavity configured for placement of an object to be processed (150) and a radiation polar plate arranged in the cavity;
an electromagnetic wave generation module (120) electrically connected with the radiation polar plate of the cavity capacitor (110) so as to generate an electromagnetic wave in the cavity capacitor (110) to heat the object to be processed (150) in the cavity capacitor (110); and
a controller (140), configured to perform the control method according to any one of claims 1 to 10.

## Patentansprüche

1. Steuerverfahren für eine Heizvorrichtung (100), wobei die Heizvorrichtung (100) ein Modul (120) zur Erzeugung elektromagnetischer Wellen umfasst, das so konfiguriert ist, dass es ein elektromagnetisches Wellensignal zum Erwärmen eines zu bearbeitenden Objekts (150) erzeugt, wobei das Steuerverfahren Folgendes umfasst:
Bestimmen oder Erhalten von Attributinformationen des zu bearbeitenden Objekts (150),
wobei die Attributinformationen mindestens Lebensmittelgruppen umfassen und jede der Lebensmittelgruppen mindestens eine Lebensmittelsorte umfasst;
Bestimmen der Betriebsleistung und/oder der Betriebszeit des Moduls (120) zur Erzeugung elektromagnetischer Wellen gemäß der Attributinformation; und
Steuern des Moduls (120) zur Erzeugung elektromagnetischer Wellen, um gemäß der Betriebsleistung und/oder der Betriebszeit zu arbeiten,
wobei die Attributinformation ferner ein Merkmalsmaß umfasst, das ein Gewicht des zu bearbeitenden Objekts (150) widerspiegelt, wobei der Schritt des Bestimmens der Betriebsleistung und/oder der Betriebszeit des Moduls zur Erzeugung elektromagnetischer Wellen (120) gemäß der Attributinformation umfasst:
Anpassen einer Leistungsbasis der Betriebsleistung gemäß dem Merkmalsmaß in Übereinstimmung mit einer voreingestellten Leistungsbasiskorrespondenz, und Anpassen eines Leistungskoeffizienten der Betriebsleistung gemäß den Lebensmittelgruppen in Übereinstimmung mit einer voreingestellten Leistungsbasiskorrespondenz; und
Berechnen der Betriebsleistung gemäß der Leistungsbasis und dem Leistungskoeffizienten, wobei die Leistungsbasiskorrespondenz Leistungsbasen aufzeichnet, die verschiedenen Merkmalsmaßen entsprechen, und wobei die Leistungskoeffizientenkorrespondenz Leistungskoeffizienten aufzeichnet, die verschiedenen Lebensmittelgruppen entsprechen, **dadurch gekennzeichnet, dass** die Heizvorrichtung (100) ferner einen Hohlraumkondensator (110) umfasst, der einen Hohlraum, der zur Platzierung des zu bearbeitenden Objekts (150) konfiguriert ist, und eine Strahlungspolarplatte, die in dem Hohlraum angeordnet ist, enthält,
wobei das Modul (120) zur Erzeugung elektromagnetischer Wellen elektrisch mit der Strahlungspolarplatte des Hohlraumkondensators (110) verbunden ist, um eine elektromagnetische Welle in dem Hohlraumkondensator (110) zu erzeugen, um das zu bearbeitende Objekt (150) in dem Hohlraumkondensator (110) zu erwärmen; und wobei das Merkmalsmaß eine Kapazität des Hohlraumkondensators (110) ist.

2. Steuerungsverfahren nach Anspruch 1, wobei der Schritt des Bestimmens der Betriebsleistung und/oder der Betriebszeit des Moduls zur Erzeugung elektromagnetischer Wellen (120) gemäß der Attributinformation umfasst:
Anpassen der Betriebsleistung gemäß den Lebensmittelgruppen und dem Merkmalsmaß in Übereinstimmung mit einer voreingestellten Leistungskorrespondenz, wobei die Leistungskorrespondenz die Betriebsleistung aufzeichnet, die verschiedenen Lebensmittelgruppen und verschiedenen Merkmalsmaßen entspricht.

3. Steuerungsverfahren nach Anspruch 1, wobei der Schritt des Bestimmens der Betriebsleistung und/oder der Betriebszeit des Moduls zur Erzeugung elektromagnetischer Wellen (120) gemäß der Attributinformation umfasst:
Anpassen einer Zeitbasis der Betriebszeit gemäß dem Merkmalsmaß in Übereinstimmung mit einer voreingestellten Zeitbasiskorrespondenz, und Anpassen eines Zeitkoeffizienten der Zeitleistung gemäß den Lebensmittelgruppen in Übereinstimmung mit einer voreingestellten Zeitbasiskorrespondenz; und
Berechnen der Betriebszeit gemäß der Zeitbasis und dem Zeitkoeffizienten, wobei die Zeitbasiskorrespondenz Zeitbasen aufzeichnet, die verschiedenen Merkmalsmaßen entsprechen, und wobei die Zeitkoeffizientenkorrespondenz Zeitkoeffizienten aufzeichnet, die verschiedenen Lebensmittelgruppen entsprechen.

4. Steuerungsverfahren nach Anspruch 1, wobei der Schritt des Bestimmens der Betriebsleistung und/oder der Betriebszeit des Moduls zur Erzeugung elektromagnetischer Wellen (120) gemäß der Attributinformation umfasst:
Anpassen der Betriebszeit gemäß den Lebensmittelgruppen und dem Merkmalsmaß in Übereinstimmung mit einer voreingestellten Zeitkorrespondenz, wobei die Zeitkorrespondenz die Betriebszeit aufzeichnet, die verschiedenen Lebensmittelgruppen und verschiedenen Merkmalsmaßen entspricht.

5. Steuerungsverfahren nach Anspruch 1, wobei
die Attributinformation außerdem eine Anfangstemperatur des zu bearbeitenden Objekts (150) umfasst.

6. Steuerungsverfahren nach Anspruch 5, wobei der Schritt des Bestimmens der Betriebsleistung und/oder der Betriebszeit des Moduls zur Erzeugung elektromagnetischer Wellen (120) gemäß der Attributinformation umfasst:
Anpassen einer Leistungsbasis der Betriebsleistung gemäß dem Merkmalsmaß undder Anfangstemperatur des zu bearbeitenden Objekts (150) in Übereinstimmung mit einer voreingestellten Leistungsbasiskorrespondenz, und Anpassen eines Leistungskoeffizienten der Betriebsleistung gemäß den Lebensmittelgruppen in Übereinstimmung mit einer voreingestellten Leistungsbasiskorrespondenz; und
Berechnen der Betriebsleistung entsprechend der Leistungsbasis und des Leistungskoeffizienten, wobei die Leistungsbasiskorrespondenz Leistungsbasen aufzeichnet, die unterschiedlichen Merkmalsmaßen und unterschiedlichen Anfangstemperaturen entsprechen, und die Leistungskoeffizientenkorrespondenz Leistungskoeffizienten aufzeichnet, die unterschiedlichen Lebensmittelgruppen entsprechen; oder
wobei das Schritt des Bestimmens der Betriebsleistung und/oder der Betriebszeit des Moduls (120) zur Erzeugung elektromagnetischer Wellen gemäß der Attributinformation umfasst:
Anpassen der Betriebsleistung gemäß den Lebensmittelgruppen, dem Merkmalsmaß und der Anfangstemperatur des zu verarbeitenden Objekts (150) in Übereinstimmung mit einer voreingestellten Leistungskorrespondenz, wobei die Leistungskorrespondenz die Betriebsleistung aufzeichnet, die verschiedenen Anfangstemperaturen, verschiedenen Lebensmittelgruppen und verschiedenen Merkmalsmaßen entspricht.

7. Steuerungsverfahren nach Anspruch 5, wobei der Schritt des Bestimmens der Betriebsleistung und/oder der Betriebszeit des Moduls zur Erzeugung elektromagnetischer Wellen (120) gemäß der Attributinformation umfasst:
Anpassen einer Zeitbasis der Betriebsleistung gemäß dem Merkmalsmaß undder Anfangstemperatur des zu bearbeitenden Objekts (150) in Übereinstimmung mit einer voreingestellten Zeitbasiskorrespondenz, und Anpassen eines Zeitkoeffizienten der Zeitleistung gemäß den Lebensmittelgruppen in Übereinstimmung mit einer voreingestellten Zeitbasiskorrespondenz; und
Berechnen der Betriebszeit gemäß der Zeitbasis und dem Zeitkoeffizienten, wobei die Zeitbasiskorrespondenz Zeitbasen aufzeichnet, die verschiedenen Merkmalsmaßen und unterschiedlichen Anfangstemperaturen entsprechen, und wobei die
Zeitkoeffizientenkorrespondenz Zeitkoeffizienten aufzeichnet, die verschiedenen Lebensmittelgruppen; oder
wobei das Schritt des Bestimmens der Betriebsleistung und/oder der Betriebszeit des Moduls (120) zur Erzeugung elektromagnetischer Wellen gemäß der Attributinformation umfasst:
Anpassen der Betriebszeit gemäß den Lebensmittelgruppen, dem Merkmalsmaß und der Anfangstemperatur des zu verarbeitenden Objekts (150) in Übereinstimmung mit einer voreingestellten Zeitkorrespondenz, wobei die Zeitkorrespondenz die Betriebszeit aufzeichnet, die verschiedenen Anfangstemperaturen, verschiedenen Lebensmittelgruppen und verschiedenen Merkmalsmaßen entspricht.

8. Steuerungsverfahren nach Anspruch 1, umfassend ferner:
Erhalten eines Merkmalsmaßes, das ein Gewicht des zu bearbeitenden Objekts widerspiegelt (150);
Bestimmen, ob das Merkmalsmaß kleiner oder gleich einem voreingestellten unteren Grenzwert ist;
Steuern des Moduls (120) zur Erzeugung elektromagnetischer Wellen, um den Betrieb zu stoppen, wenn JA; und
Steuern des Moduls (120) zur Erzeugung elektromagnetischer Wellen, um gemäß einem Betriebsparameter zu arbeiten, wenn NEIN; und/oder
Erhalten eines Merkmalsmaßes, das ein Gewicht des zu bearbeitenden Objekts widerspiegelt (150);
Bestimmen, ob das Merkmalsmaß größer oder gleich einem voreingestellten oberen Grenzwert ist;
Steuern des Moduls (120) zur Erzeugung elektromagnetischer Wellen, um den Betrieb zu stoppen, wenn JA; und
Steuern des Moduls (120) zur Erzeugung elektromagnetischer Wellen, um gemäß einem Betriebsparameter zu arbeiten, wenn NEIN.

9. Steuerungsverfahren nach Anspruch 1, wobei die Heizvorrichtung (100) ferner ein Anpassungsmodul (130) umfasst, das so konfiguriert ist, dass es eine eigene Impedanz einstellt, um eine Lastimpedanz des Moduls (120) zur Erzeugung elektromagnetischer Wellen einzustellen, wobei der Schritt des Erhaltens eines Merkmalsmaßes, das ein Gewicht des zu bearbeitenden Objekts widerspiegelt (150), umfasst:
Steuern des Moduls (120) zur Erzeugung elektromagnetischer Wellen, um ein elektromagnetisches Wellensignal mit voreingestellter Anfangsleistung zu erzeugen;
Einstellen der Impedanz des Anpassungsmoduls (130) und Bestimmen eines Impedanzwertes des Anpassungsmoduls (130), der eine optimale Lastanpassung des Moduls (120) zur Erzeugung elektromagnetischer Wellen implementiert; und
Bestimmen der Kapazität gemäß dem Impedanzwert; oder
wobei der Schritt des Erfassens eines Merkmalsmaßes, das ein Gewicht des zu bearbeitenden Objekts widerspiegelt (150), umfasst:
Steuern des Moduls (120) zur Erzeugung elektromagnetischer Wellen, um ein elektromagnetisches Wellensignal mit voreingestellter Anfangsleistung zu erzeugen;
Einstellen einer Frequenz des elektromagnetischen Wellensignals in einem Kandidatenfrequenzintervall und Bestimmen eines Frequenzwertes des elektromagnetischen Wellensignals, der eine optimale Frequenzanpassung des Hohlraumkondensators (110) implementiert; und
Bestimmen der Kapazität gemäß dem Impedanzwert.

10. Steuerungsverfahren nach Anspruch 1, **dadurch gekennzeichnet, dass**
die Lebensmittelgruppen nach einem Gehaltsbereich einer bestimmten Substanz unterteilt sind, wobei die bestimmte Substanz Wasser oder Protein ist; und
wobei die Betriebsleistung positiv mit einem Gehalt der bestimmten Substanz in den Lebensmittelgruppen korreliert ist und/oder die Betriebszeit positiv mit dem Gehalt der bestimmten Substanz in den Lebensmittelgruppen korreliert ist.

11. Heizvorrichtung (100), umfassend:
einen Hohlraumkondensator (110), der einen Hohlraum, der für die Platzierung eines zu bearbeitenden Objekts (150) konfiguriert ist, und eine in dem Hohlraum angeordnete Strahlungspolarplatte umfasst;
ein Modul (120) zur Erzeugung elektromagnetischer Wellen, das elektrisch mit der Strahlungspolarplatte des Hohlraumkondensators (110) verbunden ist, um eine elektromagnetische Welle in dem Hohlraumkondensator (110) zu erzeugen, um das zu bearbeitende Objekt (150) in dem Hohlraumkondensator (110) zu erwärmen; und
eine Steuerung (140), die so konfiguiert ist, dass sie das Steuerverfahren nach einem der Ansprüche 1 bis 10 durchführt.

## Revendications

1. Procédé de commande pour un dispositif de chauffage (100), le dispositif de chauffage (100) comprenant un module de génération d'ondes électromagnétiques (120) configuré pour générer un signal d'ondes électromagnétiques destiné à chauffer un objet à traiter (150), le procédé de commande comprenant:
la détermination ou l'obtention d'informations sur les attributs de l'objet à traiter (150), les informations sur les attributs comprenant au moins des groupes d'aliments, et chaque groupe d'aliments comprenant au moins une variété d'aliments;
la détermination de la puissance de fonctionnement et/ou de la durée de fonctionnement du module de génération d'ondes électromagnétiques (120) en fonction des informations sur les attributs; et
la commande du module de génération d'ondes électromagnétiques (120) pour qu'il fonctionne selon la puissance de fonctionnement et/ou la durée de fonctionnement, sachant que
les informations sur les attributs comprennent en outre une mesure caractéristique reflétant le poids de l'objet à traiter (150), dans lequel l'étape de détermination de la puissance de fonctionnement et/ou de la durée de fonctionnement du module de génération d'ondes électromagnétiques (120) en fonction des informations sur les attributs comprend:
la correspondance d'une base de puissance de la puissance de fonctionnement en fonction de la mesure caractéristique conformément à une correspondance de base de puissance prédéfinie, et la correspondance d'un coefficient de puissance de la puissance de fonctionnement en fonction des groupes d'aliments conformément à une correspondance de coefficient de puissance prédéfinie;
le calcul de la puissance de fonctionnement en fonction de la base de puissance et du coefficient de puissance, la correspondance de base de puissance enregistrant les bases de puissance correspondant à différentes mesures caractéristiques, et la correspondance de coefficient de puissance enregistrant les coefficients de puissance correspondant à différents groupes d'aliments, **caractérisé en ce que** le dispositif de chauffage (100) comprend en outre un condensateur de cavité (110) comprenant une cavité configurée pour le placement de l'objet à traiter (150) et une plaque polaire de rayonnement disposée dans la cavité, et le module de génération d'ondes électromagnétiques (120) est connecté électriquement à la plaque polaire de rayonnement du condensateur de cavité (110) de manière à générer une onde électromagnétique dans le condensateur de cavité (110) pour chauffer l'objet à traiter (150) dans le condensateur de cavité (110); et la mesure caractéristique est la capacitance du condensateur de cavité (110).

2. Procédé de commande selon la revendication 1, dans lequel l'étape de détermination de la puissance de fonctionnement et/ou de la durée de fonctionnement du module de génération d'ondes électromagnétiques (120) en fonction des informations sur les attributs comprend:
la correspondance de la puissance de fonctionnement en fonction des groupes d'aliments et de la mesure caractéristique conformément à une correspondance de puissance prédéfinie, la correspondance de puissance enregistrant la puissance de fonctionnement correspondant à différents groupes d'aliments et à différentes mesures caractéristiques.

3. Procédé de commande selon la revendication 1, dans lequel l'étape de détermination de la puissance de fonctionnement et/ou de la durée de fonctionnement du module de génération d'ondes électromagnétiques (120) en fonction des informations sur les attributs comprend:
la correspondance d'une base de temps de la durée de fonctionnement en fonction de la mesure caractéristique conformément à une correspondance de base de temps prédéfinie, et la correspondance d'un coefficient de temps de la durée de fonctionnement en fonction des groupes d'aliments conformément à une correspondance de coefficient de temps prédéfinie; et
le calcul de la durée de fonctionnement en fonction de la base de temps et du coefficient de temps, la correspondance de base de temps enregistrant les bases de temps correspondant à différentes mesures caractéristiques, et la correspondance de coefficient de temps enregistrant les coefficients de temps correspondant à différents groupes d'aliments.

4. Procédé de commande selon la revendication 1, dans lequel l'étape de détermination de la puissance de fonctionnement et/ou de la durée de fonctionnement du module de génération d'ondes électromagnétiques (120) en fonction des informations sur les attributs comprend:
la correspondance de la durée de fonctionnement en fonction des groupes d'aliments et de la mesure caractéristique conformément à une correspondance de temps prédéfinie, la correspondance de temps enregistrant la durée de fonctionnement correspondant à différents groupes d'aliments et à différentes mesures caractéristiques.

5. Procédé de commande selon la revendication 1, dans lequel
les informations sur les attributs comprennent en outre une température initiale de l'objet à traiter (150).

6. Procédé de commande selon la revendication 5, dans lequel l'étape de détermination de la puissance de fonctionnement et/ou de la durée de fonctionnement du module de génération d'ondes électromagnétiques (120) en fonction des informations sur les attributs comprend:
la correspondance d'une base de puissance de la puissance de fonctionnement en fonction de la mesure caractéristique et de la température initiale de l'objet à traiter (150) conformément à une correspondance de base de puissance prédéfinie, et la correspondance d'un coefficient de puissance de la puissance de fonctionnement en fonction des groupes d'aliments conformément à une correspondance de coefficient de puissance prédéfinie; et
le calcul de la puissance de fonctionnement en fonction de la base de puissance et du coefficient de puissance, la correspondance de base de puissance enregistrant les bases de puissance correspondant à différentes mesures caractéristiques et à différentes températures initiales, et la correspondance de coefficient de puissance enregistrant les coefficients de puissance correspondant à différents groupes d'aliments; ou
l'étape de détermination de la puissance de fonctionnement et/ou de la durée de fonctionnement du module de génération d'ondes électromagnétiques (120) en fonction des informations sur les attributs comprend:
la correspondance de la puissance de fonctionnement en fonction des groupes d'aliments, de la mesure caractéristique et de la température initiale de l'objet à traiter (150) conformément à une correspondance de puissance prédéfinie, la correspondance de puissance enregistrant la puissance de fonctionnement correspondant à différentes températures initiales, à différents groupes d'aliments et à différentes mesures caractéristiques.

7. Procédé de commande selon la revendication 5, dans lequel l'étape de détermination de la puissance de fonctionnement et/ou de la durée de fonctionnement du module de génération d'ondes électromagnétiques (120) en fonction des informations sur les attributs comprend:
la correspondance d'une base de temps de la durée de fonctionnement en fonction de la mesure caractéristique et de la température initiale de l'objet à traiter (150) conformément à une correspondance de base de temps prédéfinie, et la correspondance d'un coefficient de temps de la durée de fonctionnement en fonction des groupes d'aliments conformément à une correspondance de coefficient de temps prédéfinie;
le calcul de la durée de fonctionnement en fonction de la base de temps et du coefficient de temps, la correspondance de base de temps enregistrant les bases de temps correspondant à différentes mesures caractéristiques et à différentes températures initiales, et la correspondance de coefficient de temps enregistrant les coefficients de temps correspondant à différents groupes d'aliments; ou
l'étape de détermination de la puissance de fonctionnement et/ou de la durée de fonctionnement du module de génération d'ondes électromagnétiques (120) en fonction des informations sur les attributs comprend:
la correspondance de la durée de fonctionnement en fonction des groupes d'aliments, de la mesure caractéristique et de la température initiale de l'objet à traiter (150) conformément à une correspondance de temps prédéfinie, la correspondance de temps enregistrant la durée de fonctionnement correspondant à différentes températures initiales, à différents groupes d'aliments et à différentes mesures caractéristiques.

8. Procédé de commande selon la revendication 1, comprenant en outre:
l'obtention d'une mesure caractéristique reflétant le poids de l'objet à traiter (150);
la détermination de savoir si la mesure caractéristique est inférieure ou égale à un seuil de limite inférieure prédéfini;
la commande du module de génération d'ondes électromagnétiques (120) pour qu'il cesse de fonctionner si la réponse est OUI; et
la commande du module de génération d'ondes électromagnétiques (120) pour qu'il fonctionne selon un paramètre de fonctionnement si la réponse est NON; et/ou
l'obtention d'une mesure caractéristique reflétant le poids de l'objet à traiter (150);
la détermination de savoir si la mesure caractéristique est supérieure ou égale à un seuil de limite supérieure prédéfini;
la commande du module de génération d'ondes électromagnétiques (120) pour qu'il cesse de fonctionner si la réponse est OUI; et
la commande du module de génération d'ondes électromagnétiques (120) pour qu'il fonctionne selon un paramètre de fonctionnement si la réponse est NON.

9. Procédé de commande selon la revendication 1, dans lequel le dispositif de chauffage (100) comprend en outre un module d'adaptation d'impédance (130) configuré pour ajuster sa propre impédance afin d'ajuster une impédance de charge du module de génération d'ondes électromagnétiques (120), l'étape d'obtention d'une mesure caractéristique reflétant le poids de l'objet à traiter (150) comprenant:
la commande du module de génération d'ondes électromagnétiques (120) pour qu'il génère un signal d'ondes électromagnétiques de puissance initiale prédéfinie;
l'ajustement de l'impédance du module d'adaptation d'impédance (130), et la détermination d'une valeur d'impédance du module d'adaptation d'impédance (130) mettant en oeuvre une adaptation de charge optimale du module de génération d'ondes électromagnétiques (120); et
la détermination de la capacitance en fonction de la valeur d'impédance; ou
l'étape d'acquisition d'une mesure caractéristique reflétant le poids de l'objet à traiter (150) comprenant:
la commande du module de génération d'ondes électromagnétiques (120) pour qu'il génère un signal d'ondes électromagnétiques de puissance initiale prédéfinie;
l'ajustement d'une fréquence du signal d'ondes électromagnétiques dans un intervalle de fréquences candidates, et la détermination d'une valeur de fréquence du signal d'ondes électromagnétiques mettant en oeuvre une adaptation de fréquence optimale du condensateur de cavité (110); et
la détermination de la capacitance en fonction de la valeur de fréquence.

10. Procédé de commande selon la revendication 1, dans lequel
les groupes d'aliments sont divisés en fonction d'une plage de teneur en une substance définie, la substance définie étant l'eau ou la protéine; et
la puissance de fonctionnement est corrélée positivement avec la teneur de la substance définie dans les groupes d'aliments, et/ou la durée de fonctionnement est corrélée positivement avec la teneur de la substance définie dans les groupes d'aliments.

11. Dispositif de chauffage (100), comprenant:
un condensateur de cavité (110), comprenant une cavité configurée pour le placement d'un objet à traiter (150) et une plaque polaire de rayonnement disposée dans la cavité;
un module de génération d'ondes électromagnétiques (120) connecté électriquement à la plaque polaire de rayonnement du condensateur de cavité (110) de manière à générer une onde électromagnétique dans le condensateur de cavité (110) pour chauffer l'objet à traiter (150) dans le condensateur de cavité (110); et
un contrôleur (140), configuré pour mettre en oeuvre le procédé de commande selon l'une quelconque des revendications 1 à 10.
